# EUROPÄISCHE PATENTSCHRIFT

(11) **EP 1 830 042 B1**
(45) Veröffentlichungstag und Bekanntmachung des Hinweises auf die Patenterteilung: **19.01.2011**
(21) Anmeldenummer: 06123722.8
(22) Anmeldetag: 09.11.2006
(51) Int. Cl.: F01N 3/20

(54) **Statischer Mischer und Abgasbehandlungseinrichtung**
Static mixer and exhaust after treatment system
Mélangeur statique et dispositif de traitement de gaz d'échappement

(30) Priorität: 02.03.2006 DE 102006009676; 27.05.2006 DE 102006024778
(43) Veröffentlichungstag der Anmeldung: 05.09.2007
(73) Patentinhaber: J. Eberspächer GmbH & Co. KG, 73730 Esslingen (DE)
(72) Erfinder: WIRTH, Georg, 73230 Kirchheim/Teck (DE); NEUMANN, Felix, 73732 Esslingen (DE)
(74) Vertreter: BRP Renaud & Partner

(56) Entgegenhaltungen:
- EP-A- 0 894 523
- EP-A- 1 371 824
- WO-A-2005/064131
- WO-A-2005/075837
- DD-A1- 161 209
- DE-A1- 4 123 161
- DE-A1- 4 313 393
- DE-C1- 10 020 170
- DE-C1- 19 938 854
- US-A- 4 530 418
- US-E- R E36 969

## Beschreibung

Die vorliegende Erfindung betrifft einen statischen Mischer für eine Abgasanlage einer Brennkraftmaschine, insbesondere in einem Kraftfahrzeug. Die Erfindung betrifft außerdem eine Abgasbehandlungseinrichtung für eine Abgasanlage einer Brennkraftmaschine, insbesondere in einem Kraftfahrzeug, die mit einem derartigen Mischer ausgestattet ist.

Bei Brennkraftmaschinen können in deren Abgasanlage beispielsweise dann Mischer der eingangs genannten Art zur Anwendung kommen, wenn ein Gas oder eine Flüssigkeit dem Abgas zugemischt werden soll. Dabei soll die Durchmischung besonders intensiv sein, um ein möglichst homogenes Gasgemisch erzeugen zu können bzw. um eine effektive Verdampfung der eingebrachten Flüssigkeit und Durchmischung der verdampften Flüssigkeit mit dem Abgas zu realisieren. Gleichzeitig soll der Mischer in der Abgasanlage keinen allzu hohen Druckanstieg erzeugen. Da statische Mischer mit Strömungsumlenkung arbeiten, haben sie zwangsläufig einen Druckanstieg zur Folge. Es besteht daher ein Bedarf an einem effektiven Mischer, der nur einen vergleichsweise kleinen Durchströmungswiderstand besitzt. Des Weiteren ist bei Anwendungen in Kraftfahrzeugen zu berücksichtigen, dass in den dort zur Anwendung kommenden Abgasanlagen regelmäßig nur wenig Einbauraum zur Unterbringung eines solchen Mischers vorhanden ist.

Aus der EP 1 371 824 A1 ist es bekannt, in einem Abgaskanal einer Abgasanlage Mischelemente anzuordnen, mit deren Hilfe ein Reaktionsmittel mit dem Abgas vermischt werden kann, welches für eine selektive katalytische Reduktion von Stickoxiden in einem nachgeschalteten SCR-Katalysator herangezogen wird. Die Mischelemente können dabei als Strömungsleitelemente ausgestaltet sein.

Aus der DE 197 41 199 A1 ist es bekannt, ein metallisches Streckgitter als statischen Mischer in einem Strömungskanal einer Abgasreinigungsanlage zu verwenden, wodurch sich eine extrem kurze Mischstrecke erzielen lässt.

Die DE 43 13 393 A1 zeigt einen weiteren statischen Mischer, der beispielsweise stromauf eines DeNOₓ-Katalysators einer Abgasanlage zur Anwendung kommen kann. Der bekannte Mischer besitzt eine Rahmenkonstruktion, die in einem abgasführenden Kanal der Abgasanlage angeordnet ist und die mehrere quer zur Strömungsrichtung verlaufende Träger aufweist, von denen an einer Abströmseite der Rahmenkonstruktion mehrere ebene, trapezförmige Strömungsleitflächen in der Strömungsrichtung und quer dazu abstehen.

Aus der DE 41 09 305 A1 ist eine Einrichtung zum Einbringen eines Reaktionsmittels in einen Gasstrom bekannt, die mehrere Austrittsöffnungen aufweist, durch die das Reaktionsmittel in Gegenstromrichtung austritt. Jeder Austrittsöffnung ist abströmseitig ein Mischelement zur Verwirbelung des Reaktionsmittels mit dem Abgasstrom zugeordnet.

Aus der US 4,530,418 ist ein Abgaskatalysator bekannt, bei dem in einer ersten Ausführungsform ein Streckmetall mehrlagig gefaltet ist, wobei die einzelnen Lagen parallel in der Strömungsrichtung hintereinander liegen. In einer weiteren Ausführungsform des bekannten Abgaskatalysators sind von einer Platine eine Vielzahl von Strömungsleitflächen ausgestellt, wobei die Platine zu einem Rohr geformt wird, derart, dass die Strömungsleitflächen beim fertigen Rohr radial nach innen vorstehen.

Aus der WO 2005/064131 A1 ist eine Katalysatorstruktur bekannt, die dadurch gebildet ist, dass abwechselnd ein ebenes Bahnenmaterial und ein gewelltes Bahnenmaterial aufeinander gelegt werden. Zwischen den einzelnen Lagen des Bahnenmaterials sind durchströmbare Zellen ausgebildet. Die einzelnen Zellen sind dabei in der Strömungsrichtung vergleichsweise lang, so dass sie Kanäle bilden. Zwischen einem anströmseitigen Ende und einem abströmseitigen Ende enthalten die einzelnen Kanäle Strömungsleitflächen sowie Öffnungen, die so aufeinander abgestimmt sind, dass Abgas von einem Kanal zu einem benachbarten Kanal überströmen kann.

Weitere Katalysatoren sind aus der DE 100 20 170 C1 und aus der DE 199 38 854 C1 bekannt.

Die vorliegende Erfindung beschäftigt sich mit dem Problem, für einen Mischer der eingangs genannten Art sowie für eine Abgasbehandlungseinrichtung der eingangs genannten Art eine verbesserte Ausführungsform anzugeben, die sich insbesondere durch einen preiswerten Aufbau auszeichnet und bei einem vergleichsweise niedrigen Durchströmungswiderstand eine vergleichsweise intensive Durchmischungswirkung bzw. Verdampfungswirkung aufweist.

Dieses Problem wird durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Mischer mit Hilfe eines wellenförmigen Bahnenmaterials zu realisieren, das quer zur Strömungsrichtung in mehreren Lagen aufeinandergelegt ist, derart, dass sich zwischen benachbarten Lagen in der Durchströmungsrichtung durchströmbare Zellen ausbilden. Dabei ist das Bahnenmaterial mit Strömungsleitflächen ausgestattet, die bei mehreren, vorzugsweise bei sämtlichen Zellen abströmseitig gegenüber der Strömungsrichtung geneigt angeordnet sind. Das wellenförmige Bahnenmaterial lässt sich besonders preiswert herstellen. Gleichzeitig besitzt der Mischer einen konstruktiv einfachen Aufbau, wodurch auch der Mischer preiswert realisierbar ist. Darüber hinaus gewährleisten die einzelnen Zellen mit den auf vorbestimmte Weise zugeordneten Strömungsleitflächen eine gezielte und somit intensive Verdampfungswirkung bzw. Durchmischungswirkung. Gleichzeitig kann durch den gewählten Aufbau mit den strömungsführenden Zellen der Druckabfall bei der Durchströmung dieses Mischers vergleichsweise klein gehalten werden. Schließlich baut der Mischer in der Strömungsrichtung vergleichsweise kurz.

Bei einer vorteilhaften Ausführungsform ist die Wellenform des Bahnenmaterials gleichmäßig gewählt, so dass die auftretenden Wellen gleiche Wellenlängen und gleiche Amplituden besitzen. Hierdurch wird eine preiswerte Herstellung des Bahnenmaterials vereinfacht.

Bei einer vorteilhaften Weiterbildung ist das Bahnenmaterial in jeder Lage gegenüber dem Bahnenmaterial der benachbarten Lage quer zur Strömungsrichtung um eine halbe Wellenlänge versetzt angeordnet. In der Folge liegen die Wellenberge der einen Lage an den Wellentälern der benachbarten Lage an, wobei zwischen diesen Anlagestellen die Zellen ausgebildet sind. Bei dieser Konfiguration besitzen die Zellen maximale Strömungsquerschnitte, was im Hinblick auf einen niedrigen Durchströmungswiderstand vorteilhaft ist.

Die Wellen des Bahnenmaterials sind vorzugsweise sinusförmig ausgestaltet, wodurch das schichtweise oder lageweise angeordnete Bahnenmaterial quer zur Strömungsrichtung eine besonders hohe Flexibilität aufweist. Vorausgesetzt ist hier die Verwendung eines entsprechend flexiblen Werkstoffs. Zur Anwendung in Abgasanlagen kommen Stähle, insbesondere Edelstähle, in Frage. Ebenso ist es grundsätzlich möglich, die Wellen des Bahnenmaterials rechteckförmig auszugestalten, wodurch sich Zellen mit Rechteckquerschnitt realisieren lassen. Ebenso sind trapezförmige Wellenstrukturen denkbar, wodurch die Zellen Sechseck- bzw. Wabenquerschnitte erhalten.

Von besonderem Vorteil ist eine Ausführungsform, bei welcher sich das Bahnenmaterial unterbrechungsfrei zumindest über zwei benachbarte Lagen, vorzugsweise jedoch über sämtliche Lagen erstreckt. Das Bahnenmaterial ist dann an seitlichen Enden der jeweiligen Lage in die dazu benachbarte Lage umgebogen oder umgefaltet. Eine mit Hilfe des geschichteten Bahnenmaterials aufgebaute Wandstruktur lässt sich somit aus nur einem einzigen Bauteil herstellen, wodurch die Produktion dieser Wandstruktur und somit des Mischers extrem preiswert ist. Insbesondere ist es nicht erforderlich, in jeder Lage das Bahnenmaterial separat am Rohr oder an einem die Wandstruktur in Umfangsrichtung einfassenden Ring zu befestigen.

Gemäß einer anderen vorteilhaften Ausführungsform können die Strömungsleitflächen, die insbesondere integral am Bahnenmaterial ausgeformt sein können, so dimensioniert und gegenüber der Strömungsrichtung so orientiert sein, dass sie in der Strömungsrichtung die Zellen wenigstens zu 80% oder wenigstens zu 90% oder wenigstens zu 95% oder zu 100% blickdicht verschließen bzw. überlappen. Durch diese Ausgestaltung kann eine intensive Durchmischung bzw. eine effektive Verdampfung realisiert werden. Beispielsweise wird dadurch gewährleistet, dass stromauf des Mischers eingedüste Flüssigkeitströpfchen mit einer sehr hohen Wahrscheinlichkeit auf die Strömungsleitflächen auftreffen und so den Mischer nicht ungehindert durchströmen können. Sobald die Flüssigkeit auf den Strömungsleitflächen anhaftet, ist sie der Abgasströmung und deren Verdampfungswirkung ausgesetzt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1a: eine stark vereinfachte, prinzipielle Schnittan- sicht einer Abgasbehandlungseinrichtung,
- Fig. 1b: eine stark vereinfachte, prinzipielle Schnittan- sicht einer Abgasanlage,
- Fig. 2: einen Querschnitt der Abgasbehandlungseinrichtung bzw. der Abgasanlage gemäß Schnittlinien II in Fig. 1a bzw. 1b,
- Fig. 3: eine vergrößerte perspektivische Detailansicht auf eine Anströmseite eines Mischers,
- Fig. 4: eine vergrößerte Detailansicht in Strömungsrich- tung auf die Anströmseite des Mischers,
- Fig. 5: eine vergrößerte perspektivische Detailansicht auf eine Abströmseite des Mischers,
- Fig. 6: eine vergrößerte Ansicht quer zur Strömungsrich- tung auf ein Detail des Mischers,
- Fig. 7: ein Querschnitt wie in Fig. 2, jedoch bei einer anderen Ausführungsform,
- Fig. 8: eine perspektivische Ansicht wie in Fig. 5, jedoch bei der Ausführungsform gemäß Fig. 7,
- Fig. 9: einen Längsschnitt des Mischers aus Fig. 8.

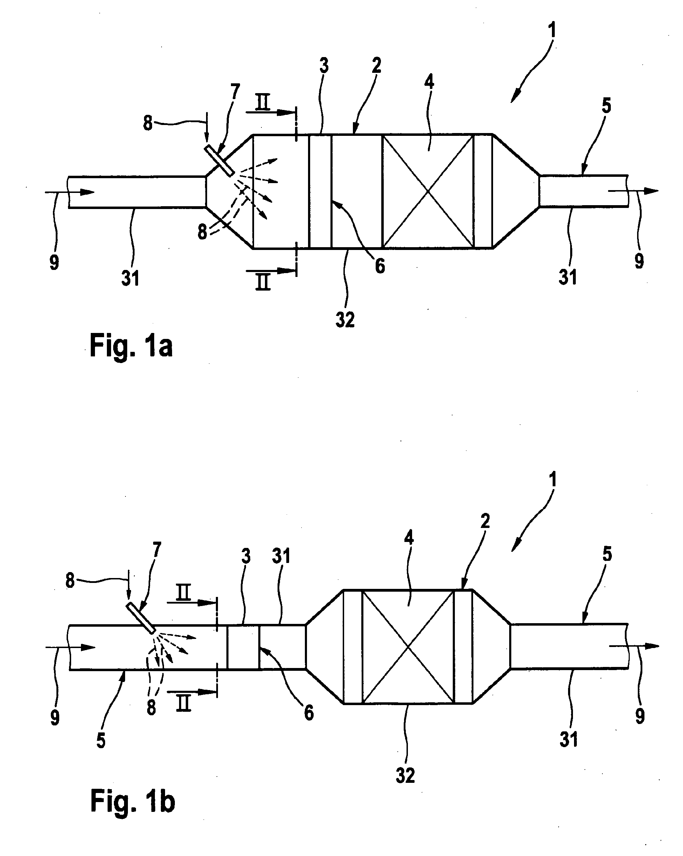

Entsprechend Fig. 1a umfasst eine Abgasbehandlungseinrichtung 1 ein Gehäuse 2 mit einem Rohrkörper 32, der einen Mantel des Gehäuses 2 bildet. Im Rohrkörper 32 ist zumindest ein Abgasbehandlungseinsatz 4 angeordnet. Die Abgasbehandlungseinrichtung 1 ist in eine Abgasanlage 5 einer nicht gezeigten Brennkraftmaschine eingebunden, die vorzugsweise in einem Kraftfahrzeug angeordnet ist. Bei der Abgasbehandlungseinrichtung 1 kann es sich um einen Schalldämpfer, um ein Partikelfilter, um einen Katalysator oder um eine beliebige Kombination der vorgenannten Einrichtungen handeln. Dementsprechend handelt es sich bei dem Abgasbehandlungseinsatz 4 beispielsweise um ein Katalysatorelement oder um ein Partikelfilterelement. Ebenso kann es sich um eine Schalldämpferanordnung handeln.

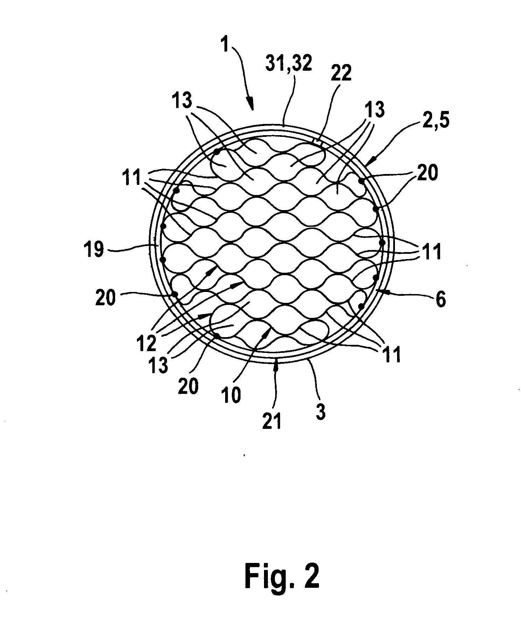

Stromauf des Abgasbehandlungseinsatzes 4 ist im Rohrkörper 32 ein statischer Mischer 6 angeordnet, der weiter unten mit Bezug auf die Fig. 2 bis 9 näher erläutert wird. Stromauf des Mischers 6 ist eine Eindüseinrichtung 7 angeordnet, mit deren Hilfe stromauf des Mischers 6 eine Flüssigkeit, symbolisiert durch Pfeile 8, in die Abgasströmung, symbolisiert durch Pfeile 9, eingedüst werden kann. Bei einem SCR-Katalysator kann es sich bei der eingedüsten Flüssigkeit 8 beispielsweise um Ammoniak oder um eine wässrige Harnstofflösung handeln. Bei einem Partikelfilter mit integriertem oder vorgeschaltetem Oxidationskatalysator kann es sich bei der eingedüsten Flüssigkeit um flüssigen Kraftstoff handeln. Der Mischer 6 dient in der Abgasanlage 5 bzw. in der Abgasbehandlungseinrichtung 1 dazu, die eingedüste Flüssigkeit 8 möglichst weitgehend zu verdampfen und mit der Abgasströmung möglichst intensiv zu durchmischen, um auf diese Weise ein möglichst homogenes Flüssigkeitsdampf-Abgas-Gemisch stromab des Mischers 6 zu erzeugen. Gleichzeitig soll der Mischer 6 möglichst kompakt bauen, um ihn ohne weiteres in eine derartige Abgasbehandlungseinrichtung 1 bzw. Abgasanlage 5 integrieren zu können. Darüber hinaus ist es wünschenswert, dass der Mischer 6 einen möglichst niedrigen Durchströmungswiderstand aufweist, um den Abgasgegendruck in der Abgasanlage 5 möglichst klein zu halten.

Die Abgasanlage 5 weist eine Abgasleitung 31 auf, in welche die Abgasbehandlungseinrichtung 1 eingebunden ist. Bei der in Fig. 1b gezeigten Ausführungsform ist der Mischer 6 in dieser Abgasleitung 31 angeordnet, und zwar stromauf der Abgasbehandlungseinrichtung 1. Die Eindüseinrichtung 7 ist wieder stromauf des Mischers 6 angeordnet und ist somit ebenfalls an der Abgasleitung 31 angebracht. Diese Ausführungsform ermöglicht somit die Verwendung einer herkömmlichen Abgasbehandlungseinrichtung 1, da das verbesserte Gemisch bereits stromauf innerhalb der Abgasleitung 31 mit Hilfe des Mischers 6 erzeugt wird.

Entsprechend Fig. 2 weist der statische Mischer 6 eine Wandstruktur 10 auf, die quer zur Strömungsrichtung im Rohrkörper 32 (Fig. 1a) bzw. in der Abgasleitung 31 (Fig. 1b) angeordnet ist. Für den Mischer 6 bzw. für dessen Wandstruktur 10 bildet der Rohrkörper 32 bzw. die Abgasleitung 31 jeweils ein Rohr 3, in welches die Wandstruktur 10 eingesetzt ist. Wenn im folgenden Bezug auf das Rohr 3 genommen wird, ist somit sowohl der Rohrkörper 32 gemäß Fig. 1a als auch die Abgasleitung 31 gemäß Fig. 1b gemeint. Das Rohr 3, also der Rohrkörper 32 bzw. die Abgasleitung 31 kann in Abhängigkeit der jeweiligen Einbausituation einen grundsätzlich beliebigen Querschnitt aufweisen. Denkbar sind z.B. kreisförmige, elliptische, rechteckige Querschnitte.

Die Wandstruktur 10 ist dabei so dimensioniert, dass sie den Querschnitt des Rohrs 3 im wesentlichen ausfüllt. Die Wandstruktur 10 ist aus mehreren Lagen 11 eines wellenförmigen Bahnenmaterials 12 aufgebaut. Die einzelnen Lagen 11 erstrecken sich dabei jeweils quer zur Strömungsrichtung und liegen quer zur Strömungsrichtung und quer zu ihrer Längsrichtung aufeinander. Dabei ist das Bahnenmaterial 12 in den einzelnen Lagen 11 so angeordnet, dass zwischen dem Bahnenmaterial 12 benachbarter Lagen 11 eine Vielzahl von Zellen 13 ausgebildet sind, die jeweils für sich in der Strömungsrichtung durchströmbar sind.

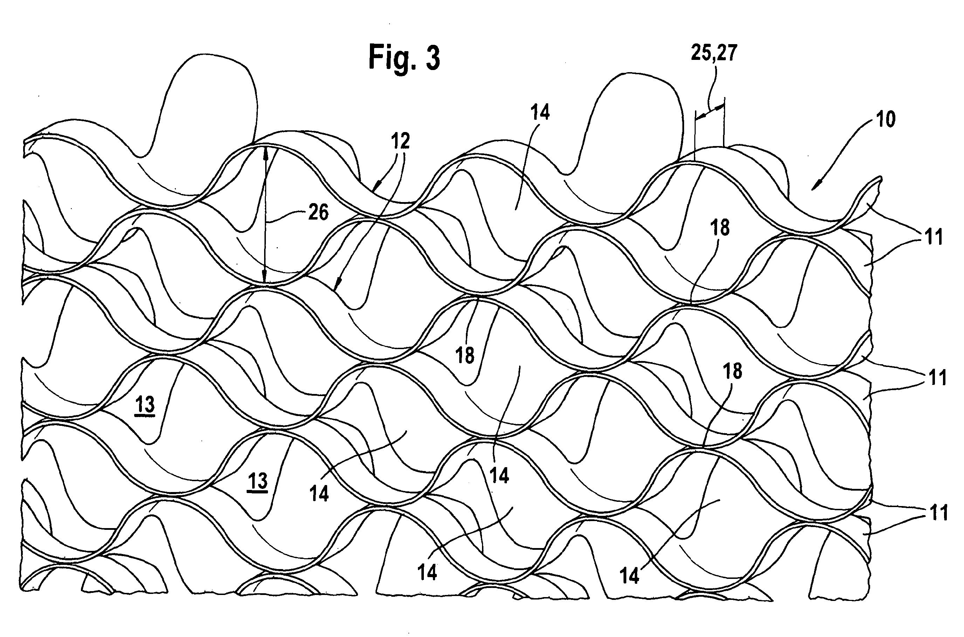

Entsprechend den Fig. 3 bis 8 weist das Bahnenmaterial 12 für mehrere Zellen 13, vorzugsweise jedoch für sämtliche Zellen 13, jeweils eine Strömungsleitfläche 14 auf. Diese Strömungsleitflächen 14 sind am Bahnenmaterial 12 so angeordnet, dass sie bei den zuvor genannten Zellen 13 jeweils an deren Abströmseite angeordnet sind. Dabei erstrecken sich die Strömungsleitflächen 14 sowohl in der Strömungsrichtung als auch quer dazu, d.h. die Strömungsleitflächen 14 sind gegenüber der Strömungsrichtung angestellt.

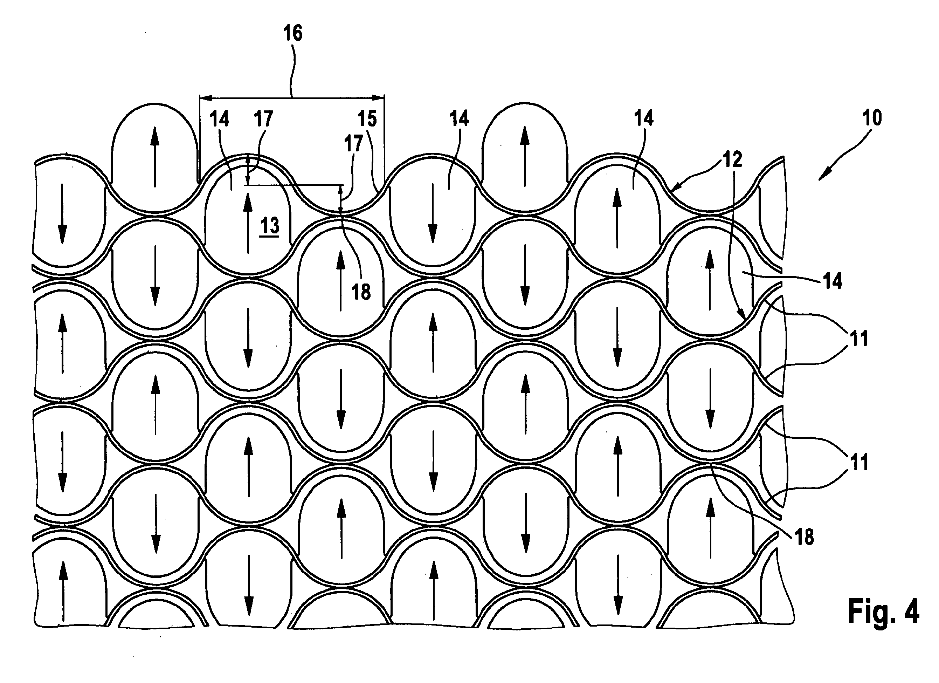

Vorzugsweise ist das Bahnenmaterial 12 so hergestellt, dass in allen Lagen 11 die einzelnen Wellen 15 (vergleiche Fig. 4) gleichförmig ausgestaltet sind, so dass sie insbesondere gleiche Wellenlängen 16 (vergleiche Fig. 4) und gleiche Amplituden 17 (vergleiche Fig. 4) aufweisen. Hierdurch kann zur Herstellung sämtlicher Lagen 11 dasselbe Bahnenmaterial 12 verwendet werden. Des Weiteren wird die Wandstruktur 10 zweckmäßig dadurch hergestellt, dass das Bahnenmaterial 12 bei benachbarten Lagen 11 quer zur Strömungsrichtung jeweils um eine halbe Wellenlänge 16 versetzt angeordnet ist. In der Folge kontaktieren sich bei benachbarten Lagen 11 Wellenberge und Wellentäler des Bahnenmaterials 12 in Kontaktstellen 18 (vergleiche die Fig. 3, 4 und 7). Hierdurch ergibt sich eine gleichmäßige, insbesondere symmetrische Anordnung der Zellen 13 innerhalb der Wandstruktur 10. Bei den hier gezeigten Ausführungsformen ist das Bahnenmaterial 12 sinusförmig gestaltet bzw. sinusförmig gewellt. Hierdurch erhalten die einzelnen Zellen 13 im wesentlichen kreisförmige Querschnitte. Bei anderen Ausführungsformen ist es beispielsweise möglich, die Wellen 15 des Bahnenmaterials 12 rechteckförmig oder trapezförmig auszugestalten, wodurch sich für die einzelnen Zellen 13 rechteckige bzw. sechseckige oder wabenförmige Querschnitte erzielen lassen.

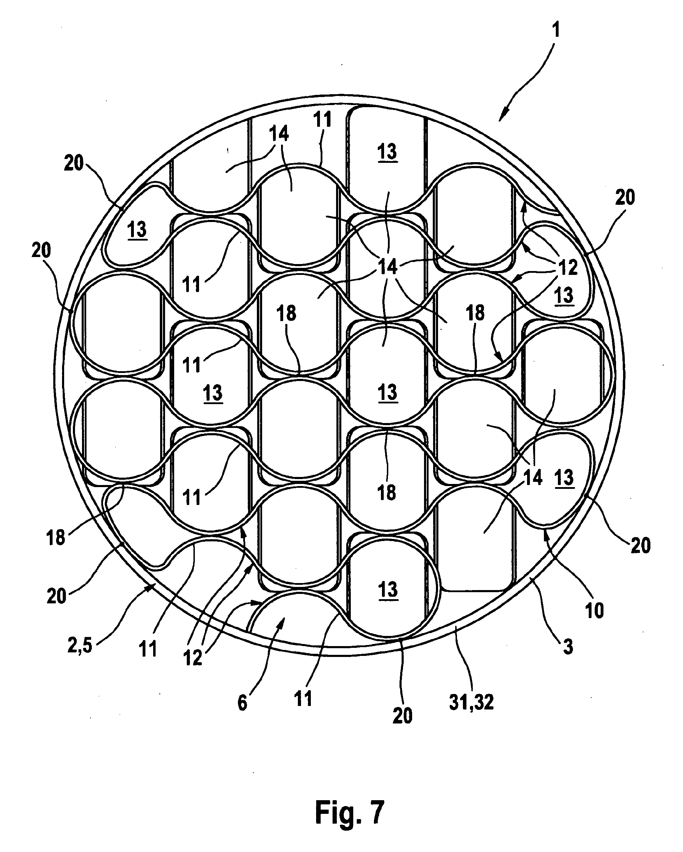

Grundsätzlich ist es möglich, für jede Lage 11 ein separates Stück Bahnenmaterial 12 zu verwenden. Bevorzugt ist jedoch eine Ausführungsform, bei der sich das Bahnenmaterial 12 zumindest über zwei benachbarte Lagen 11 unterbrechungsfrei erstreckt, wobei dann bei zumindest einer Lage 11 an deren seitlichem Ende das Bahnenmaterial 12 in die jeweilige dazu benachbarte Lage 11 umgebogen oder umgefaltet ist. Vorzugsweise erstreckt sich das Bahnenmaterial 12 unterbrechungsfrei, also in einem Stück über sämtliche Lagen 11, wie es beispielsweise in Fig. 2 und in Fig. 7 dargestellt ist. Am seitlichen Ende jeder Lage 11 ist dann das Bahnenmaterial 12 zur nächsten benachbarten Lage 11 hin umgebogen bzw. umgefaltet.

Bei der in Fig. 2 gezeigten Ausführungsform ist das Bahnenmaterial 12 bzw. die Wandstruktur 10 in Umfangsrichtung von einem Ring 19 eingefasst. An diesem Ring 19 ist das Bahnenmaterial 12 befestigt. Beispielsweise können hierzu einzelne Befestigungsstellen 20, z.B. durch Schweißpunkte, hergestellt werden. Vorzugsweise sind die Befestigungsstellen 20 bzw. die Schweißpunkte so verteilt, dass das Bahnenmaterial 12 in jeder Lage 11 zumindest an einem seitlichen Ende der jeweiligen Lage 11 mit dem Ring 19 verbunden ist. Bei einem durchgehenden einstückigen Bahnenmaterial 12 kann es zweckmäßig sein, bei benachbarten Lagen 11 die Befestigungsstellen 20 wechselweise an dem einen und am anderen Ende vorzusehen. Die Befestigungsstellen 20 können auch durch Lötstellen gebildet sein.

Die Wandstruktur 10, also das Bahnenmaterial 12 bildet zusammen mit dem Ring 19 eine Einheit 21, die komplett vormontierbar ist und die im vormontierten Zustand in das Rohr 3 einsetzbar ist. Um das Einsetzen dieser Einheit 21 in das Rohr 3 zu vereinfachen, kann der Ring 19, z. B. bei 22, geschlitzt sein. Zum Einsetzen in das Rohr 3 lässt sich der Ring 19 dadurch zusammendrücken. Gleichzeitig kann über das Bahnenmaterial 12 eine radiale Spannung in den Ring 19 eingeleitet werden, die den Ring 19 aufzuweiten sucht. In der Folge kann der Ring 19 und somit die Einheit 21 Herstellungstoleranzen ausgleichen. Der Ring 19 ist im montierten Zustand am Rohr 3 bzw. am Rohrkörper 3 der Abgasbehandlungseinrichtung 1 auf geeignete Weise festgelegt, beispielsweise durch axiale Anlage an einer Stufe und/oder durch Schweiß-oder Lötpunkte.

Des Weiteren ist es gemäß Fig. 7 ebenfalls möglich, die Wandstruktur 10 bzw. das Bahnenmaterial 12 ohne den Ring 19 direkt in das Rohr 3 einzusetzen. Das Bahnenmaterial 12 ist dann unmittelbar am Rohr 3 befestigt. Die Anordnung der Befestigungsstellen 20 erfolgt dann zweckmäßig analog zu deren Verteilung entlang des Rings 19. Die Anbindung des Bahnenmaterials 12 am Rohr 3 erfolgt z.B. wieder über Schweiß- oder Lötstellen.

Bei der Verwendung eines durchgehenden einstückigen Bahnenmaterials 12 zur Realisierung aller Lagen 11 der Wandstruktur 10, bei dem außerdem die Strömungsleitflächen 14 integral am Bahnenmaterial 12 ausgeformt sind, kann der vollständige Mischer 6 im Extremfall aus nur einem einzigen Bauteil, nämlich aus dem Bahnenmaterial 12 hergestellt werden. Falls optional auch der Ring 19 vorgesehen wird, besteht die Einheit 21 ggf. nur aus diesen beiden Bestandteilen. Die Herstellung des Mischers 6 wird dadurch vergleichsweise preiswert.

Von besonderem Vorteil ist dabei eine Ausführungsform, bei welcher das Bahnenmaterial 12 bei benachbarten Lagen 11 zwischen den seitlichen Enden der einzelnen Lagen 11, in denen das Bahnenmaterial 12 der beiden Lagen 11 aneinander und/oder am Rohr 3 bzw. am Ring 19 fixiert sein kann, lose aneinander anliegen. Das heißt, dass an den Kontaktstellen 18 keine fixe Verbindung zwischen den einzelnen Lagen 11 des Bahnenmaterials 12 vorliegt. Durch diese Bauweise sind insbesondere Relativbewegungen zwischen dem Bahnmaterial 12 benachbarter Lagen 11 möglich, was insbesondere eine spannungsfreie Reaktion der Wandstruktur 10 auf Temperaturänderungen, auch bei Thermoschock, ermöglicht. Gleichzeitig können Resonanzschwingungen durch Reibung bedämpft werden.

Gemäß den Fig. 3 bis 5, 7 bis 9 können die Strömungsleitflächen 14 bei den gezeigten vorteilhaften Ausführungsformen entlang des Bahnenmaterials 12 regelmäßig angeordnet sein, und zwar so, dass sich innerhalb des Bahnenmaterials 12 eine sich wiederholende Struktur ergibt. Bei den hier gewählten Ausführungsformen stehen die einzelnen Strömungsleitflächen 14, die entlang des Bahnenmaterials 12 aufeinanderfolgen, bezüglich der Strömungsrichtung jeweils mit entgegengesetzten Orientierungen vom Bahnenmaterial 12 ab.

Bei der Ausführungsform gemäß den Fig. 3 bis 5 sind diejenigen Strömungsleitflächen 14, die bezüglich der Strömungsrichtung mit gleichen Orientierungen vom Bahnenmaterial 12 abstehen, entlang des Bahnenmaterials 12 genau um zwei Wellenlängen 16 voneinander beabstandet. Im Unterschied dazu sind diejenigen Strömungsleitflächen 14, die bezüglich der Strömungsrichtung mit entgegengesetzten Orientierungen vom Bahnenmaterial 12 abstehen, entlang des Bahnenmaterials 12 so verteilt angeordnet, dass sie in der einen quer zur Strömungsrichtung verlaufenden Erstreckungsrichtung des Bahnenmaterials 12 einen Abstand von einer halben Wellenlänge 16 und in der entgegengesetzten Erstreckungsrichtung einen Abstand von drei halben Wellenlängen 16 voneinander aufweisen. Durch gezielte Anordnung des Bahnenmaterials 12 innerhalb der Lagen 11 lässt sich die in den Fig. 3 bis 5 gezeigte Struktur ausbilden, bei welcher die Strömungsleitflächen 14 bei benachbarten Zellen 13, die zwischen benachbarten Lagen 11 ausgebildet sind, gegenüber der Strömungsrichtung mit entgegengesetzten Orientierungen vom Bahnenmaterial 12 abstehen. Durch die gewählte Anordnung der Strömungsleitflächen 14 ergibt sich eine intensive Mischungswirkung.

Bei der in den Fig. 7 bis 9 gezeigten Ausführungsform sind diejenigen Strömungsleitflächen 14, die bezüglich der Strömungsrichtung mit gleicher Orientierung vom Bahnenmaterial 12 abstehen, entlang des Bahnenmaterials 12 genau um eine Wellenlänge 16 voneinander beabstandet. Im Unterschied dazu sind diejenigen Strömungsleitflächen 14, die bezüglich der Strömungsrichtung mit entgegengesetzten Orientierungen vom Bahnenmaterial 12 abstehen, entlang des Bahnenmaterials 12 so verteilt angeordnet, dass sie in der sich quer zur Strömungsrichtung erstreckenden Erstreckungsrichtung des Bahnenmaterials 12 direkt aufeinander folgen, also einen Abstand von einer halben Wellenlänge 16 aufweisen.

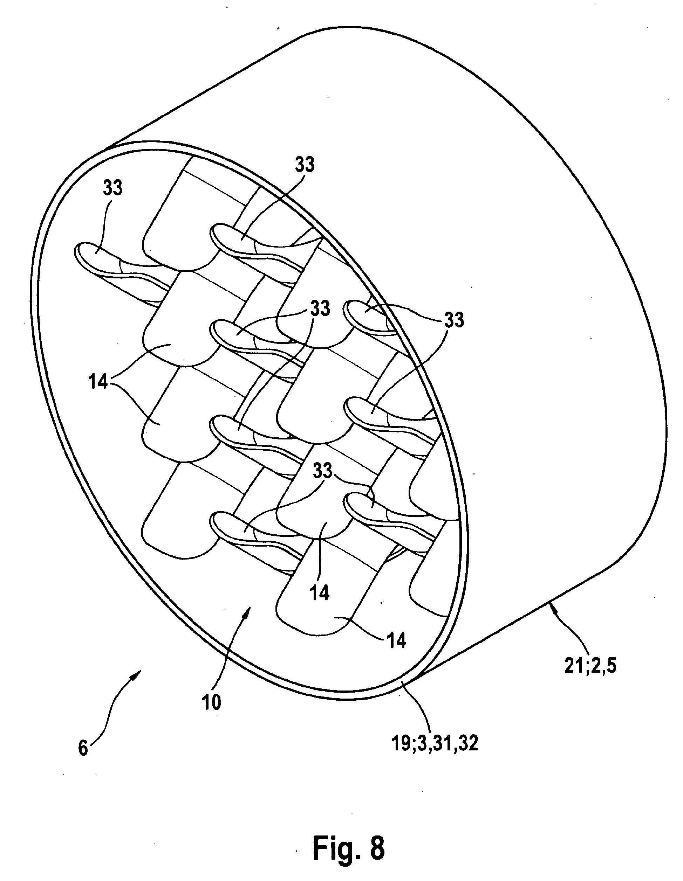

Während bei der in den Fig. 3 bis 5 gezeigten Ausführungsform das Bahnenmaterial 12 in jeder Lage 11 mit den Strömungsleitflächen 14 versehen ist, ist bei der in den Fig. 7 und 8 gezeigten Ausführungsform die Wandstruktur 10 so aufgebaut, dass sich Lagen 11 mit Strömungsleitflächen 14 und Lagen 11 ohne Strömungsleitflächen 14 einander abwechseln.

Bei der Ausführungsform der Fig. 7 bis 9 sind die Strömungsleitflächen 14 innerhalb der Wandstruktur 10 so verteilt angeordnet, dass bei benachbarten Zellen 13 benachbarter Lagen 11 die Strömungsleitflächen 14 gegenüber der Strömungsrichtung mit gleichsinniger Orientierung vom Bahnenmaterial 12 abstehen. In Fig. 7 ist dementsprechend eine vertikale Ausrichtung von Zellen 13 mit gleichsinnig orientierten Strömungsleitflächen 14 erkennbar.

Im Unterschied dazu sind bei der in den Fig. 3 bis 5 gezeigten Ausführungsform die Strömungsleitflächen 14 innerhalb der Wandstruktur so verteilt angeordnet, dass bei benachbarten Zellen 13 benachbarter Lagen 11 die Strömungsleitflächen gegenüber der Strömungsrichtung mit entgegengesetzter Orientierung vom Bahnenmaterial 12 abstehen. Dementsprechend ergibt sich in Fig. 4 eine diagonal verlaufende Struktur der Zellen 13 mit gleichsinnig orientierten Strömungsleitflächen 14.

Um die Mischungswirkung und die Verdampfungswirkung des Mischers 6 zu intensivieren, können die Strömungsleitflächen 14 außerdem die folgenden Merkmale kumulativ oder alternativ realisieren. Die Strömungsleitflächen 14 können gegenüber der Strömungsrichtung etwa um 45° abgewinkelt sein, und zwar vorzugsweise, wie oben erwähnt, abwechselnd in der einen Richtung und in anderen Richtung. Dies wird besonders deutlich in den Fig. 3 und 5, 7 und 8.

In den Fig. 4 und 7 ist erkennbar, dass die Strömungsleitflächen 14 zweckmäßig so dimensioniert und gegenüber der Strömungsrichtung, die in den Fig. 4 und 7 der Blickrichtung entspricht, so orientiert sind, dass die einzelnen Zellen 13 in der Strömungsrichtung mehr oder weniger überlappen und somit mehr oder weniger blickdicht verschließen. Beispielsweise realisieren die Strömungsleitflächen 14 in der Strömungsrichtung zumindest eine 80%-ige oder wenigstens eine 90%-ige oder wenigstens eine 95%-ige abströmseitige Überlappung der Zellen 13, wodurch die gesamte Wandstruktur 10 zu wenigstens 80%, 90% oder 95% in der Strömungsrichtung blickdicht verschlossen ist.

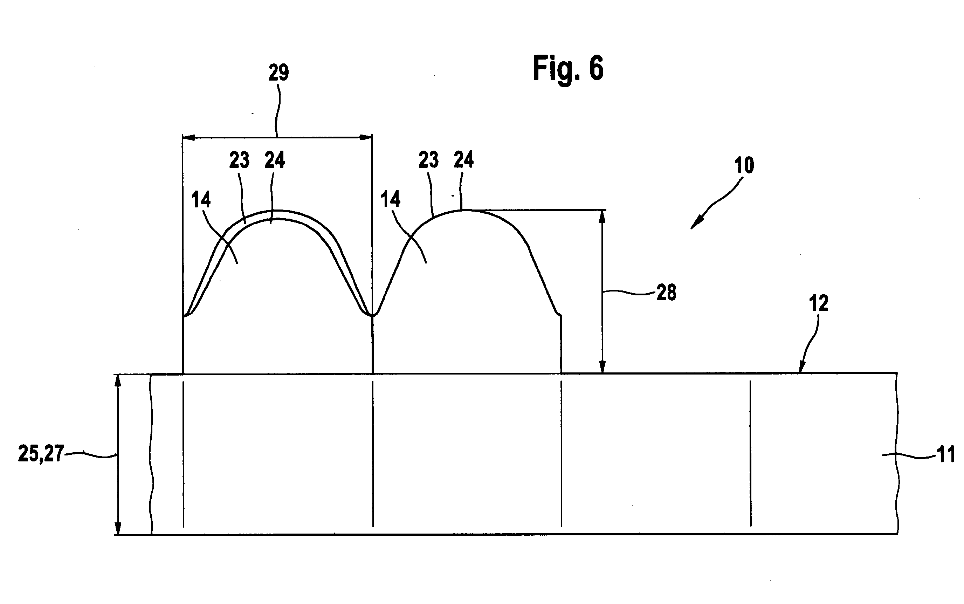

Zur Verbesserung der Verdampfungswirkung können die Strömungsleitflächen 14 gemäß Fig. 6 an ihrem jeweiligen Abströmende 23 jeweils eine Abrisskante 24 aufweisen oder als solche ausgestaltet sein.

Zur Realisierung einer möglichst kompakten Bauweise für den Mischer 6 kann das Bahnenmaterial 12 zweckmäßig so dimensioniert werden, dass bei den einzelnen Zellen 13 ein Durchmesser 26, der quer zur Strömungsrichtung gemessen ist, größer sein kann als eine Länge 27, die in Strömungsrichtung gemessen ist. Die Länge 27 der Zellen 13 entspricht einer Breite 25 des Bahnenmaterials 12. Zusätzlich oder alternativ kann gemäß Fig. 6 eine Längserstreckung 28 der jeweiligen Strömungsleitfläche 14, die in Strömungsrichtung gemessen ist, etwa gleich groß sein wie die in Strömungsrichtung gemessene Länge 27 der jeweils zugeordneten Zelle 13. Des Weiteren können die Strömungsleitflächen 14 quer zur Strömungsrichtung jeweils eine Quererstreckung 29 aufweisen, die etwa gleich groß ist wie der quer zur Strömungsrichtung gemessene Durchmesser 26 der jeweils zugeordneten Zelle 13. Im wesentlichen entspricht besagte Quererstreckung 29 der jeweiligen Strömungsleitfläche 14, insbesondere der halben Wellenlänge 16.

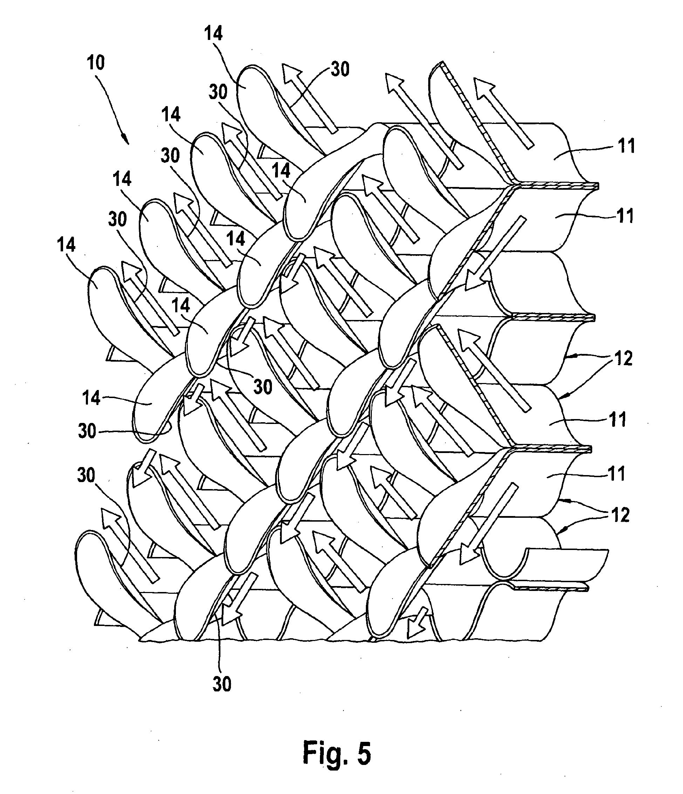

Wie Fig. 5 entnehmbar ist, können die Strömungsleitflächen 14 jeweils eine Anströmseite 30 aufweisen, die konvex gewölbt ist. Insbesondere kann besagte Anströmseite 30 sattelförmig gewölbt sein. Im Unterschied dazu können die Strömungsleitflächen 14 bei der in Fig. 8 gezeigten Ausführungsform Anströmseiten 33 aufweisen, die konkav gewölbt sind. Insbesondere können auch diese Anströmseiten 33 sattelförmig gewölbt sein.

Fig. 8 zeigt die mit dem Ring 19 versehene vormontierte Einheit 21, die als solche in das jeweilige Rohr 3 einsetzbar ist. Grundsätzlich kann es sich bei Fig. 8 auch um einen Ausschnitt des besagten Rohrs 3 handeln, also um einen Ausschnitt der Abgasbehandlungseinrichtung 2 bzw. der Abgasanlage 5.

Als Werkstoff für das Bahnenmaterial 12 und ggf. für den Ring 19 eignet sich Stahl oder Stahlblech, vorzugsweise Edelstahl bzw. Edelstahlblech. Mögliche Stahllegierungen sind beispielsweise Legierungen mit folgenden Euro-Norm-Nummern oder EN-Nummern: 1.4509, 1.4435, 1.4512, 1.4438, 1.4513, 1.4541, 1.4522, 1.4571, 1.4301 und 1.4828.

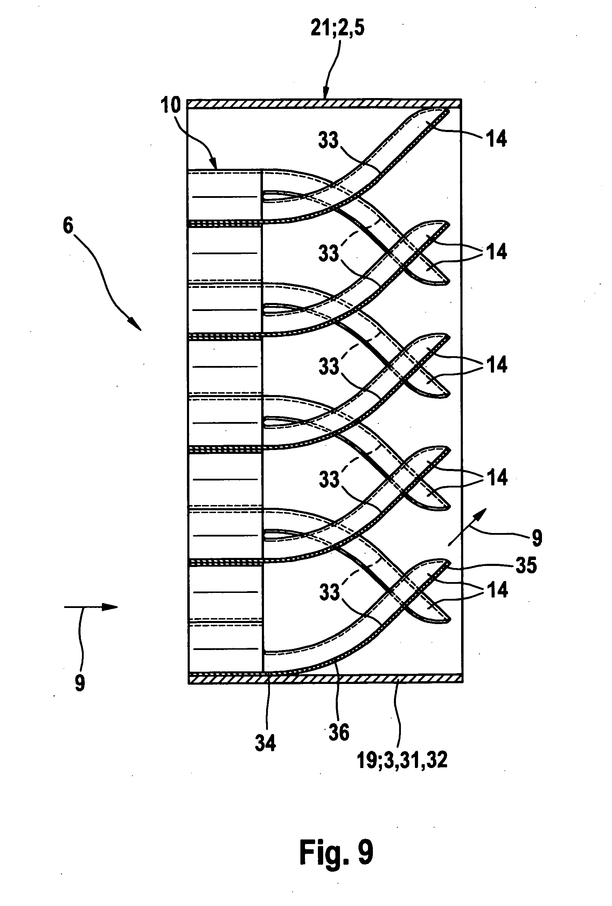

Entsprechend Fig. 9 sind die Strömungsleitflächen 14 vorzugsweise so geformt, dass sich ein stetiger Übergang in die quer zur Strömungsrichtung verlaufende Erstreckungsrichtung ergibt. Die Strömungsleitflächen 14 besitzen dadurch einen abgerundeten sanften Übergang mit einem möglichst großen Radius. Hierdurch wird erreicht, dass ein Gegendruckanstieg bei der Umlenkung der Strömung möglichst klein bleibt. Gleichzeitig können dadurch Spannungsspitzen in der Wandstruktur 10 reduziert und die Ausbildung von Knickstellen und Brüchen sowie die Entstehung von Rissen bei Thermoschockbelastung vermieden werden. Bei den schaufelartigen Strömungsleitflächen 14 lassen sich somit im einzelnen ein anströmseitiger Abschnitt 34, der unmittelbar an die Wandstruktur 10 bzw. an das Bahnenmaterial 12 anschließt und der sich parallel zur ankommenden Abgasströmung 9 sowie geradlinig erstreckt, ein abströmseitiger Abschnitt 35, der eine Abströmrichtung der Abgasströmung 9 definiert und der sich geradlinig erstreckt, sowie ein bogenförmiger oder gekrümmter Mittelabschnitt 36 voneinander unterscheiden, der die beiden geradlinigen Abschnitte 34, 35 stetig miteinander verbindet.

## Patentansprüche

1. Statischer Mischer für eine Abgasanlage (5) einer Brennkraftmaschine, insbesondere in einem Kraftfahrzeug,
- mit einer quer zur Strömungsrichtung in einem Rohr (3) anzuordnenden Wandstruktur (10), die mehrere quer zur Strömungsrichtung aufeinander liegende Lagen (11) eines wellenförmigen Bahnenmaterials (12) aufweist,
- wobei zwischen dem Bahnenmaterial (12) benachbarter Lagen (11) in der Strömungsrichtung durchströmbare Zellen (13) ausgebildet sind,
- wobei das Bahnenmaterial (12) für mehrere oder für alle Zellen (13) Strömungsleitflächen (14) aufweist, **dadurch gekennzeichnet, dass** die Strömungsleitflächen (14) am Bahnenmaterial (12) so angeordnet sind, dass sie bei den besagten Zellen (13) an deren Abströmseite angeordnet sind und sich in der Strömungsrichtung sowie quer dazu erstrecken.

2. Mischer nach Anspruch 1,
**dadurch gekennzeichnet,**
- **dass** das Bahnenmaterial (12) in allen Lagen (11) gleichförmig ausgestaltet ist und Wellen (15) gleicher Wellenlänge (16) und gleicher Amplitude (17) aufweist, und/oder
- **dass** das Bahnenmaterial (12) benachbarter Lagen (11) quer zur Strömungsrichtung um eine halbe Wellenlänge (16) versetzt angeordnet ist, und/oder
- **dass** die Wellen (15) des Bahnenmaterials (12) sinusförmig oder rechteckförmig oder trapezförmig gestaltet sind.

3. Mischer nach Anspruch 1 oder 2,
**dadurch gekennzeichnet,**
**dass** sich das Bahnenmaterial (12) unterbrechungsfrei über alle oder zumindest über zwei benachbarte Lagen (11) erstreckt und bei wenigstens einer Lage (11) an deren seitlichem Ende in die dazu benachbarte Lage (11) umgebogen oder umgefaltet ist.

4. Mischer nach einem der Ansprüche 1 bis 3,
**dadurch gekennzeichnet,**
- **dass** die Strömungsleitflächen (14) entlang des Bahnenmaterials (12) regelmäßig angeordnet sind, und/oder
- **dass** innerhalb der Wandstruktur (10) Lagen (11) mit Strömungsleitflächen (14) und Lagen (11) ohne Strömungsleitflächen (14) sich einander abwechselnd aufeinander liegen, und/oder
- **dass** die Strömungsleitflächen (14) gegenüber der Strömungsrichtung etwa um 45° abgewinkelt sind.

5. Mischer nach einem der Ansprüche 1 bis 4,
**dadurch gekennzeichnet,**
- **dass** die entlang des Bahnenmaterials (12) benachbarten Strömungsleitflächen (14) bezüglich der Strömungsrichtung mit entgegengesetzter Orientierung vom Bahnenmaterial (12) abstehen, und/oder
- **dass** die Strömungsleitflächen (14) bei benachbarten Zellen (13) benachbarter Lagen (11) gegenüber der Strömungsrichtung mit entgegengesetzter oder mit gleichsinniger Orientierung vom Bahnenmaterial (12) abstehen.

6. Mischer nach einem der Ansprüche 1 bis 5,
**dadurch gekennzeichnet,**
- **dass** die bezüglich der Strömungsrichtung mit gleicher Orientierung vom Bahnenmaterial (12) abstehenden Strömungsleitflächen (14) entlang des Bahnenmaterials (12) einen Abstand von zwei Wellenlängen (16) voneinander aufweisen, und
- **dass** die bezüglich der Strömungsrichtung mit entgegengesetzter Orientierung vom Bahnenmaterial (12) abstehenden Strömungsleitflächen (14) entlang des Bahnenmaterials (12) in der einen Richtung einen Abstand von einer halben Wellenlänge (16) und in der anderen Richtung einen Abstand von drei halben Wellenlängen (16) aufweisen.

7. Mischer nach einem der Ansprüche 1 bis 6,
**dadurch gekennzeichnet,**
**dass** die Strömungsleitflächen (14) integral am Bahnenmaterial (12) ausgeformt sind.

8. Mischer nach einem der Ansprüche 1 bis 7,
**dadurch gekennzeichnet,**
**dass** die Strömungsleitflächen (14) so dimensioniert und gegenüber der Strömungsrichtung so orientiert sind, dass sie in der Strömungsrichtung die Zellen (13) zumindest zu 80% oder zumindest zu 90% oder zumindest zu 95% überlappen und/oder blickdicht verschließen.

9. Mischer nach einem der Ansprüche 1 bis 8,
**dadurch gekennzeichnet,**
- **dass** ein quer zur Strömungsrichtung gemessener Durchmesser (26) der jeweiligen Zelle (13) größer ist als ihre in Strömungsrichtung gemessene Länge (27), und/oder
- **dass** eine in Strömungsrichtung gemessene Längserstreckung (28) der jeweiligen Strömungsleitfläche (14) etwa gleich groß ist wie eine in Strömungsrichtung gemessene Länge (27) der zugeordneten Zelle (23), und/oder
- **dass** eine quer zur Strömungsrichtung gemessene Quererstreckung (29) der jeweiligen Strömungsleitfläche (14) etwa gleich groß ist wie ein quer zur Strömungsrichtung gemessener Durchmesser (26) der zugeordneten Zelle (13).

10. Mischer nach einem der Ansprüche 1 bis 9,
**dadurch gekennzeichnet,**
- **dass** die Strömungsleitflächen (14) an ihren jeweiligen Abströmenden (23) jeweils eine Abrisskante (24) aufweisen, und/oder
- **dass** die Strömungsleitflächen (14) jeweils konvex oder konkav, insbesondere sattelförmig, gewölbte Anströmseiten (30; 33) aufweisen.

11. Mischer nach einem der Ansprüche 1 bis 10,
**dadurch gekennzeichnet,**
- **dass** das Bahnenmaterial (12) in Umfangsrichtung von einem Ring (19) eingefasst ist, der im Einbauzustand in das Rohr (3) eingesetzt ist, und/oder
- **dass** das Bahnenmaterial (12) zusammen mit dem Ring (19) eine vormontierbare Einheit (21) bildet, die im Einbauzustand im Rohr (3) angeordnet ist.

12. Mischer nach einem der Ansprüche 1 bis 11,
**dadurch gekennzeichnet,**
- **dass** das Bahnenmaterial (12) bei mehreren oder bei allen Lagen (11) an den seitlichen Enden am Rohr (3) oder am Ring (19) befestigt ist, und/oder
- **dass** das Bahnenmaterial (12) bei benachbarten Lagen (11) zwischen den seitlichen Enden lose aneinander anliegt.

13. Abgasbehandlungseinrichtung für eine Abgasanlage (5) einer Brennkraftmaschine, insbesondere in einem Kraftfahrzeug,
- mit wenigstens einem Abgasbehandlungseinsatz (4), der in einem Rohrkörper (32) der Abgasbehandlungseinrichtung (1) angeordnet ist,
- mit einem im Rohrkörper (32) stromauf des Abgasbehandlungseinsatzes (4) angeordneten Mischer (6) nach einem der Ansprüche 1 bis 12, dessen Rohr (3) durch den Rohrkörper (32) der Abgasbehandlungseinrichtung (1) gebildet ist,
- mit einer Eindüseinrichtung (7) zum Einbringen einer Flüssigkeit stromauf des Mischers (6).

14. Abgasanlage für eine Brennkraftmaschine, insbesondere in einem Kraftfahrzeug,
- mit wenigstens einer Abgasbehandlungseinrichtung (2), die in eine Abgasleitung (31) der Abgasanlage (5) eingebunden ist und die zumindest einen Abgasbehandlungseinsatz (4) aufweist, der in einem Rohrkörper (32) der Abgasbehandlungseinrichtung (1) angeordnet ist,
- mit einem in der Abgasleitung (31) stromauf der Abgasbehandlungsrichtung (1) angeordneten Mischer (6) nach einem der Ansprüche 1 bis 12, dessen Rohr (3) durch die Abgasleitung (31) der Abgasanlage (5) gebildet ist,
- mit einer Eindüseinrichtung (7) zum Einbringen einer Flüssigkeit stromauf des Mischers (6).

## Claims

1. A static mixer for an exhaust system (5) of a combustion engine, more preferably in a motor vehicle,
- with a wall structure (10) to be arranged in a pipe (3) transversely to the flow direction, comprising a plurality of layers (11) of a wave-shaped web material (12) lying on top of one another transversely to the flow direction,
- wherein between the web material (12) of adjacent layers (11) cells (13) that can be subjected to through flow in flow direction are formed,
- wherein the web material (12) comprises flow guiding surfaces (14) for a plurality of or for all cells (13), **characterized in that** the flow guiding surfaces (14) are arranged on the web material (12) in such a manner that at said cells (13) they are arranged on their trailing side and extend in the flow direction and transversely thereto.

2. The mixer according to Claim 1, **characterized**
- **in that** the web material (12) in all layers (11) is configured uniformly and comprises waves (15) of the same wave length (16) and the same amplitude (17), and/or
- **in that** the web material (12) of adjacent layers (11) transversely to the flow direction is arranged offset by half a wave length (16), and/or
- **in that** the waves (15) of the web material (12) are configured sinusoidally or rectangularly or trapezoidally.

3. The mixer according to Claim 1 or 2, **characterized in that** the web material (12) extends without interruption over all or at least over two adjacent layers (11) and at least one layer (11) at its lateral end is bent over or folded over into the layer (11) adjacent thereto.

4. The mixer according to any one of the Claims 1 to 3, **characterized**
- **in that** the flow guiding surfaces (14) are regularly arranged along the web material (12) and/or
- **in that** within the wall structure (10) layers (11)with flow guiding surfaces (14) and layers (11) without flow guiding surfaces (14) lie on top of one another in an alternating manner, and/or
- **in that** the flow guiding surfaces (14) relative to the flow direction are angled-off by approximately 45°.

5. The mixer according to any one of the Claims 1 to 4, **characterized**
- **in that** the flow guiding surfaces (14) adjacent along the web material (12) with respect to the flow direction stand away from the web material (12) with opposite orientation, and/or
- **in that** the flow guiding surfaces (14) at adjacent cells (13) of adjacent layers (11) with respect to the flow direction stand away from the web material (12) with opposing or concordant orientation.

6. The mixer according to any one of the Claims 1 to 5, **characterized**
- **in that** the flow guiding surfaces (14) with respect to the flow direction standing away from the web material (12) with the same orientation along the web material (12)have a spacing from one another along the web material (12) of two wave lengths (16) and
- **in that** the flow guiding surfaces (14) with respect to the flow direction standing away from the web material (12) with opposite orientation along the web material (12) in the one direction have a spacing of half a wave length (16) and in the other direction a spacing of three half wave lengths (16).

7. The mixer according to any one of the Claims 1 to 6, **characterized in that** the flow guiding surfaces (14) are integrally moulded out of the web material (12).

8. The mixer according to any one of the Claims 1 to 7, **characterized in that** the flow guiding surfaces (14) are so dimensioned and with respect to the flow direction so orientated that in flow direction they overlap the cells (13) at least by 80% or at least by 90% or at least by 95% and/or close said cells in a visually tight manner.

9. The mixer according to any one of the Claims 1 to 8, **characterized**
- **in that** a diameter (26) of the respective cell (13) measured transversely to the flow direction is greater than its length (27) measured in flow direction, and/or
- **in that** a longitudinal extension (28) of the respective flow guiding surface (14) measured in flow direction is approximately of the same size as a length (27) of the associated cell (23) measured in flow direction, and/or
- **in that** a transverse extension (29) of the respective flow guiding surface (14) measured transversely to the flow direction is approximately of the same size as a diameter (26) of the associated cell (13) measured transversely to the flow direction.

10. The mixer according to any one of the Claims 1 to 9, **characterized**
- **in that** the flow guiding surfaces (14) at their respective trailing ends (23) each have a tear-off edge (24), and/or
- **in that** the flow guiding surfaces (14) each comprise leading sides (30; 33) curved convexly or concavely, more preferably saddle-like.

11. The mixer according to any one of the Claims 1 to 10, **characterized**
- **in that** the web material (12) in circumferential direction is edged by a ring (19) which in the installation state is inserted in the pipe (3) and/or
- **in that** the web material (12) together with the ring (19) forms a pre-assemblable unit (21) which in the installation state is arranged in the pipe (3).

12. The mixer according to any one of the Claims 1 to 11, **characterized**
- **in that** the web material (12) with a plurality of or with all layers (11) is fastened to the pipe (3) or to the ring (19) at the lateral ends, and/or
- **in that** the web material (12) at adjacent layers (11) forms a loose contact between the lateral ends.

13. An exhaust gas treatment device for an exhaust system (5) of a combustion engine, more preferably in a motor vehicle,
- with at least one exhaust gas treatment insert (4) which is arranged in a pipe body (32) of the exhaust gas treatment device (1),
- with a mixer (6) arranged in the pipe body (32) upstream of the exhaust gas treatment insert (4) according to any one of the Claims 1 to 12, whose pipe (3) is formed by the pipe body (32) of the exhaust gas treatment device (1),
- with an injection device (7) for introducing a liquid upstream of the mixer (6).

14. An exhaust system for a combustion engine, more preferably in a motor vehicle,
- with at least one exhaust gas treatment device (2), which is incorporated in an exhaust line (31) of the exhaust system (5) and which at least comprises one exhaust gas treatment insert (4) which is arranged in a pipe body (32) of the exhaust gas treatment device (1),
- with a mixer (6) arranged in the exhaust line (31) upstream of the exhaust gas treatment device (1) according to any one of the Claims 1 to 12, whose pipe (3) is formed by the exhaust line (31) of the exhaust system (5),
- with an injection device (7) for introducing a liquid upstream of the mixer (6).

## Revendications

1. Mélangeur statique pour une installation d'échappement (5) d'un moteur à combustion interne, en particulier sur un véhicule automobile,
- comprenant une structure de paroi (10) à disposer transversalement au sens d'écoulement dans un tuyau (3), laquelle présente plusieurs couches (11), disposées les unes sur les autres transversalement au sens d'écoulement, d'un matériau en bandes (12) de forme ondulée,
- des cellules (13) pouvant être traversées dans le sens d'écoulement étant réalisées entre le matériau en bandes (12) de couches (11) voisines,
- le matériau en bandes (12) présentant, pour plusieurs cellules ou pour toutes les cellules (13), des surfaces de guidage d'écoulement (14), **caractérisé en ce que** les surfaces de guidage d'écoulement (14) sont disposées sur le matériau en bandes (12) de telle sorte qu'elles sont disposées dans le cas desdites cellules (13) sur leur côté de sortie d'écoulement et s'étendent dans le sens d'écoulement ainsi que transversalement à ce sens.

2. Mélangeur selon la revendication 1,
**caractérisé en ce que**
- le matériau en bandes (12) est conçu avec une forme identique dans toutes les couches (11) et présente des ondes (15) de même longueur (16) et de même amplitude (17), et/ou
- **en ce que** le matériau en bandes (12) de couches (11) voisines est disposé transversalement au sens d'écoulement décalé d'une demi-longueur d'onde (16) et/ou
- **en ce que** les ondes (15) du matériau en bandes (12) sont conçues avec une forme sinusoïdale ou rectangulaire ou trapézoïdale.

3. Mélangeur selon la revendication 1 ou 2,
**caractérisé en ce que**
le matériau en bandes (12) s'étend sans interruption sur toutes les couches ou au moins sur deux couches (11) voisines et, dans le cas d'au moins une couche (11), est plié ou replié sur son extrémité latérale dans la position (11) voisine de la première.

4. Mélangeur selon l'une quelconque des revendications 1 à 3,
**caractérisé en ce que**
- les surfaces de guidage d'écoulement (14) sont disposées régulièrement le long du matériau en bandes (12), et/ou
- **en ce que**, à l'intérieur de la structure de paroi (10), des couches (11) avec des surfaces de guidage d'écoulement (14) et des couches (11) sans surfaces de guidage d'écoulement (14) sont disposées les unes sur les autres en s'alternant, et/ou
- **en ce que** les surfaces de guidage d'écoulement (14) sont coudées d'environ 45° par rapport au sens d'écoulement.

5. Mélangeur selon l'une quelconque des revendications 1 à 4,
**caractérisé en ce que**
- les surfaces de guidage d'écoulement (14) voisines le long du matériau en bandes (12) débordent du matériau en bandes (12) par rapport au sens d'écoulement avec une orientation opposée, et/ou
- **en ce que** les surfaces de guidage d'écoulement (14) débordent du matériau en bandes (12) dans le cas de cellules (13) voisines de couches (11) voisines par rapport au sens d'écoulement avec une orientation opposée ou avec une orientation dans le même sens.

6. Mélangeur selon l'une quelconque des revendications 1 à 5,
**caractérisé en ce que**
- les surfaces de guidage d'écoulement (14) débordant du matériau en bandes (12) par rapport au sens d'écoulement avec une orientation identique présentent le long du matériau en bandes (12) un espacement de deux longueurs d'onde (16), et
- **en ce que** les surfaces de guidage d'écoulement (14), débordant du matériau en bandes (12) par rapport au sens d'écoulement avec une orientation opposée, présentent un espacement d'une demi-longueur d'onde (16) le long du matériau en bandes (12) dans une direction et un espacement de trois demi-longueurs d'onde (16) dans l'autre direction.

7. Mélangeur selon l'une quelconque des revendications 1 à 6,
**caractérisé en ce que**
les surfaces de guidage d'écoulement (14) sont formées intégralement sur le matériau en bandes (12).

8. Mélangeur selon l'une quelconque des revendications 1 à 7,
**caractérisé en ce que**
les surfaces de guidage d'écoulement (14) sont dimensionnées et orientées par rapport au sens d'écoulement de telle sorte que, dans le sens d'écoulement, les cellules (13) se chevauchent au moins pour 80 % ou au moins pour 90 % ou au moins pour 95 % et/ou se ferment de façon étanche à la vue.

9. Mélangeur selon l'une quelconque des revendications 1 à 8,
**caractérisé en ce que**
- un diamètre (26), mesuré transversalement au sens d'écoulement, de la cellule (13) respective est supérieur à sa longueur (27) mesurée dans le sens d'écoulement, et/ou
- **en ce qu'**un étirement longitudinal (28), mesuré dans le sens d'écoulement, de la surface de guidage d'écoulement (14) respective est à peu près identique à une longueur (27), mesurée dans le sens d'écoulement, de la cellule (23) associée, et/ou
- **en ce qu'**un étirement transversal (29), mesuré transversalement au sens d'écoulement, de la surface de guidage d'écoulement (14) respective est à peu près aussi grand qu'un diamètre (26), mesuré transversalement au sens d'écoulement, de la cellule (13) associée.

10. Mélangeur selon l'une quelconque des revendications 1 à 9,
**caractérisé en ce que**
- les surfaces de guidage d'écoulement (14) présentent chacune une arête d'arrachement (24) sur leurs extrémités de sortie d'écoulement (23) respectives, et/ou
- **en ce que** les surfaces de guidage d'écoulement (14) présentent chacune des côtés d'arrivée d'écoulement (30 ; 33) incurvés, en particulier en forme de selle, convexe ou concave.

11. Mélangeur selon l'une quelconque des revendications 1 à 10,
**caractérisé en ce que**
- le matériau en bandes (12) est enfermé dans le sens d'écoulement par une bague (19), qui est insérée dans le tuyau (3) dans l'état de montage, et/ou
- **en ce que** le matériau en bandes (12) forme conjointement avec la bague (19) une unité (21) pouvant être prémontée, qui est disposée dans le tuyau (3) dans l'état de montage.

12. Mélangeur selon l'une quelconque des revendications 1 à 11,
**caractérisé en ce que**
- le matériau en bandes (12) est fixé, pour plusieurs couches ou toutes les couches (11), sur les extrémités latérales sur le tuyau (3) ou sur la bague (19), et/ou
- **en ce que** le matériau en bandes (12) s'applique librement les unes sur les autres dans le cas de couches (11) voisines entre les extrémités latérales.

13. Dispositif de traitement de gaz brûlés pour une installation d'échappement (5) d'un moteur à combustion interne, en particulier sur un véhicule automobile,
- comprenant au moins un insert de traitement de gaz brûlés (4), qui est disposé dans un corps de tuyau (32) du dispositif de traitement de gaz brûlés (1),
- un mélangeur (6) disposé dans le corps de tuyau (32) en amont de l'insert de traitement de gaz brûlés (4) selon l'une quelconque des revendications 1 à 12, dont le tuyau (3) est formé par le corps de tuyau (32) du dispositif de traitement de gaz brûlés (1),
- un dispositif d'injection (7) pour l'introduction d'un liquide en amont du mélangeur (6).

14. Installation d'échappement pour un moteur à combustion interne, en particulier sur un véhicule automobile,
- comprenant au moins un dispositif de traitement de gaz brûlés (2), intégré dans une conduite d'échappement (31) de l'installation d'échappement (5) et présentant au moins un insert de traitement de gaz brûlés (4), qui est disposé dans un corps de tuyau (32) du dispositif de traitement de gaz brûlés (1),
- un mélangeur (6) disposé dans la conduite d'échappement (31) en amont du sens de traitement de gaz brûlés (1) selon l'une quelconque des revendications 1 à 12, dont le tuyau (3) est formé par la conduite d'échappement (31) de l'installation d'échappement (5),
- un dispositif d'injection (7) pour l'introduction d'un liquide en amont du mélangeur (6).
